# EUROPEAN PATENT APPLICATION

(11) **EP 1 356 865 A1**
(43) Date of publication of application: **29.10.2003**
(21) Application number: 02008860.5
(22) Date of filing: 19.04.2002
(51) Int. Cl.: B01J 37/02, B01D 53/94

(54) **Article comprising a cryogel**

(71) Applicant: OMG AG & Co. KG, 63457 Hanau-Wolfgang (DE)
(72) Inventor: The designation of the inventor has not yet been filed
(74) Representative: VOSSIUS & PARTNER

(57) **Abstract**

The present invention refers to an article comprising at least one carrier having at least one coating thereon, wherein the coating comprises at least one cryogel. Optionally the coating further comprises at least one catalytically active material. The articles can be used in catalytic, absorption or adsorption applications.

## Description

The present invention refers to an article comprising at least one carrier having at least one coating thereon, wherein the coating comprises at least one cryogel an optionally a catalytically active material and method for the preparation thereof. The article is particularly suitable for use in absorber, adsorber and catalytic applications.

The pollutants in exhaust gases, particularly in the exhaust gases of internal combustion engines of motor vehicles, are a health hazard to human beings, animals and plant life. Accordingly, the pollutants have to be converted as completely as possible into harmless compounds by treating the exhaust gases. The pollutants are, in particular, unburnt hydrocarbons, carbon monoxide and oxides of nitrogen, which can be converted, to a high percentage, into harmless reaction products such as carbon dioxide, steam (water) and nitrogen, by using a catalytic device such as a multifunctional catalytic device (e.g. three way catalytic device).

The catalytic devices required for this purpose have to meet stringent requirements with respect to performance, effectiveness, and activity. For example, when used in motor vehicles, the catalytic devices must become active at low temperatures, and, in the long term, must guarantee a high percentage conversion of the pollutants to be removed in all the temperature and space velocity ranges in question.

Catalytic devices generally contain a ceramic or metallic carrier which, as such, would have a small surface area. Therefore, the carrier is generally coated with a material having a high surface area before the catalytically active material is deposited thereon. Processes for depositing high surface area materials (the so-called washcoat) are e.g. disclosed in U.S. Patent Nos. 5,165,970, 4,191,126 and 6,149,973.

U.S. Patent No. 4,757,045 describes a method in which the carrier is contacted with a slurry containing the high surface area material and the resultant slurry-coated carrier is subsequently dried to remove the liquid and to leave on the carrier a coating of the high surface area material.

WO 99/12642 discloses a catalytic gas filter, such as a porous, ceramic filter and a method of depositing the catalyst in the filter, which includes impregnating the filter with a solution of a catalyst precursor. The method includes then immobilizing the catalyst precursor, drying the impregnated filter, converting the precursor to an active catalyst, and recovering the catalytic gas filter for use. The precursor can be immobilized by freeze-drying.

Aluminum oxide catalyst supports have also been disclosed which are prepared using alumina sols (U.S. No. 5,210,062). According to this reference the carrier is coated with a reactive mixture made from components comprising aluminum alkoxide, water and acid or the alkoxide in an alcohol. The reactive mixture is coated onto the carrier, subsequently dried and calcined to form a γ-alumina washcoat.

It was an object of the present invention to provide an improved washcoat. In particular, it was an object to provide a washcoat having a high surface area.

In one embodiment, the present invention refers to an article comprising at least one carrier having at least one coating thereon, wherein the coating comprises at least one cryogel. Optionally the coating further comprises at least one catalytically active material.

The invention also relates to a method of preparing an article comprising:
(i) providing at least one carrier;
(ii) providing a sol;
(iii) applying the sol to the carrier;
(iv) freeze drying the sol; and
(v) calcining the freeze-dried sol to form a cryogel.

In yet another embodiment of the invention the above article is described absorber, adsorber and catalytic applications.
- Figure 1:: Scanning electron microscope images of a flake-like alumina cryogel prepared by freeze-drying and calcining.
- Figure 2:: Nitrogen adsorption experiment for freeze-dried alumina calcined at 450°C;
(a) nitrogen adsorption-desorption isotherm;
(b) pore size distribution obtained from Barret-Joyner-Halenda (BJH) desorption.
- Figure 3:: Nitrogen adsorption experiment for freeze-dried alumina on a cordierite monolith substrate calcined at 450 °C;
(a) nitrogen adsorption-desorption isotherm;
(b) pore size distribution obtained from BJH desorption.
- Figure 4:: Scanning electron microscope images of an alumina cryogel on a monolith.
- Figure 5:: Scanning electron microscope images of an alumina cryogel on a monolith with a different angle than in Figure 4.

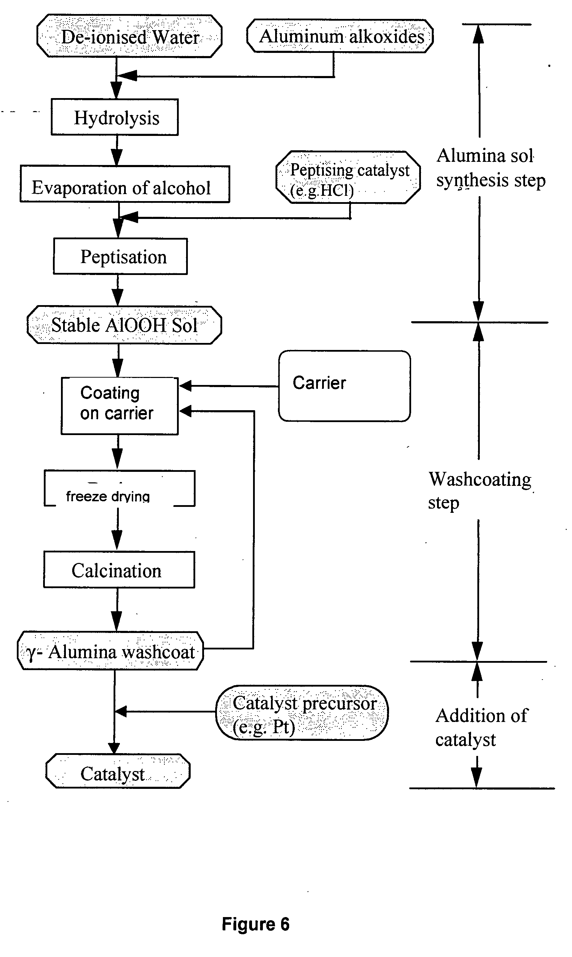

- Figure 6:: A general scheme showing one possible method of preparing a catalytic device having a γ-alumina washcoat.

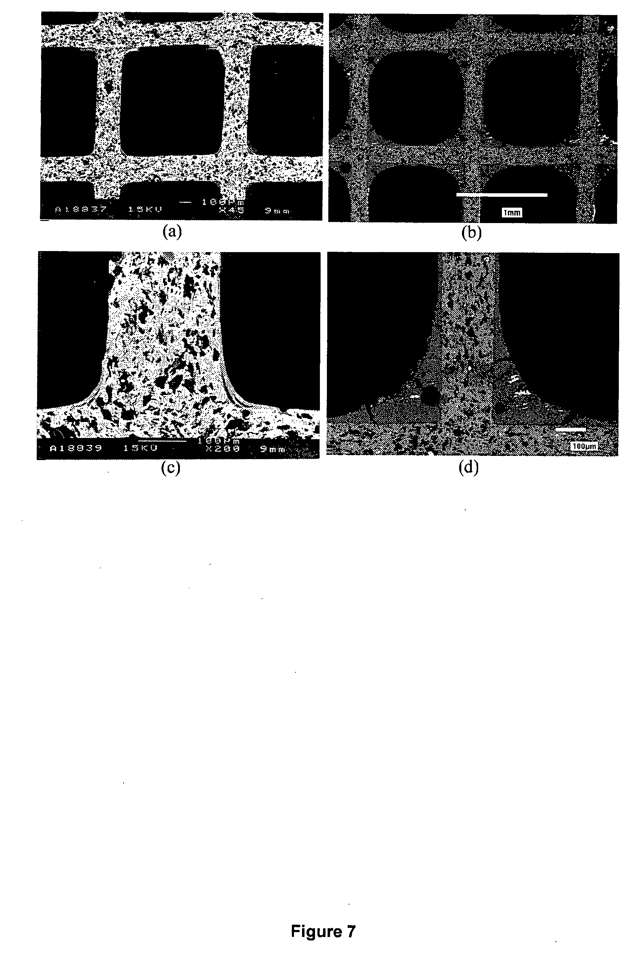

- Figure 7:: Scanning electron microscope images of an alumina coatings on a monolith: (a) and (c) were prepared by sol-gel technology and drying at room temperature; (b) and (d) were prepared by coating a slurry of alumina according to traditional washcoat techniqes.

The articles of the present invention comprise at least one carrier having at least one coating thereon.

The carrier can be any suitable solid substrate and the choice will depend on the application of the article. The carrier can be of any form and can be one individual substrate (such as a plate, rod, block or tube) or a plurality of substrates (such as beads, rings and other regularly or irregularly shaped supports). The material of the carrier should be chosen according to the desired application of the article and can be any material which does not deteriorate during the formation of the cryogel (i.e. it should not deteriorate when in contact with the sol, during the freeze-drying and the calcining). Examples of suitable materials are metals, glasses and ceramics.

In one preferred embodiment, the article of the invention can be employed as a catalytic device for treating exhaust gases of an internal combustion engine. In this field monolithic carriers as well as bead carriers are known. Monolithic carriers generally have a plurality of fine, substantially parallel, continuous and open-ended gas flow passages which extend therethrough but foam-type ceramic monoliths can also be employed. The carriers generally consist of refractory, ceramic material such as alumina, sillimanite, silicates, alumino-silicates, magnesium silicates, titanates, titania, zirconia, spinels, zeolites, silicon carbide, silicon nitride, spinel, zirconia, petalite, spodumene, cordierite, mullite, or combinations thereof. Preferred materials are cordierite, mullite and α-alumina. A particularly preferred material is cordierite since it has a favorable thermal expansion coefficient and good thermal shock properties. These properties are required to accommodate the rapid changes in temperature in catalytic devices of vehicles. In addition, the monolithic carrier can be prepared from refractory metals such as stainless steel or other suitable corrosion-resistant, iron-based alloys.

A coating is present on the carrier. The coating can be a single coating, which is applied to the carrier. In one embodiment of the invention the carrier can have two or more different or identical coatings, which are applied to different regions of the carrier. In a further embodiment, the carrier can have a multilayer coating comprising different or identical layers one on top of the other. Combinations of these embodiments are also possible. In a preferred embodiment of the invention one to six, more preferably two to four coatings are present on the carrier.

At least one of the above-mentioned layers comprises at least one cryogel and optionally at least one catalytically active material. The other layers can also contain cryogel, alternatively they can e.g. contain a conventional support material, which has been applied as a slurry or a gel and has been dried at room temperature or at elevated temperatures. The other layers can also contain at least one catalytically active material, if desired. Other layer compositions are also possible depending on the end use of the article.

The articles according to the present invention comprise at least one cryogel. Within the meaning of the invention a cryogel is a material, which is obtainable by drying a sol at a temperature below 0 °C, preferably from about -5 °C to about -300 °C, more preferably from about -50 °C to about -200 °C and subsequently calcining the material, preferably at a temperature from about 300 °C to about 900 °C, more preferably from about 400 °C to about 600 °C. It is equally possible to obtain a cryogel by drying and subsequently calcining a gel instead of a sol. To facilitate reading of the present application the term "sol" is used throughout, however, it is to be interpreted as covering both sols and gels, unless explicitly stated otherwise.

Sols and gels are well-known in the art and are described e.g. in detail in "Kirk-Othmer Encyclopedia of Chemical Technology" (Vol. 22, pages 497 et seqq., 4^{th} ed., John Wiley & Sons, Inc. 1997) and in J. Livage et al., *Prog. Solid St. Chem.,* 18, 259-341, (1988). For the practice of the present invention the sol can be prepared by any known method from organic precursors (e.g. alkoxides) or inorganic salts (e.g. halides). For example, the sol can be prepared from an inorganic alkoxide or mixture of inorganic alkoxides, which are hydrolyzed. In one method the alkoxide can be hydrolyzed in water and/or the parent alcohol of the alkoxide. Optionally an acid or base can be employed to catalyze the reaction. Then the sol can be aged for at least about 24 hours. Processes for preparing sols have been described e.g. by B. E. Yoldas in *J. Mat. Sci.,* 10, 1856-1860 (1975); *Ceramic Bulletin,* Vol. 54, No 3, 286-289 (1975) and *Ceramic Bulletin,* Vol. 54, No 3, 289-290 (1975). It is also possible to modify the metal alkoxide(s) with an organic compound such as acetyl-acetone. U.S. Patent 5,210,062 describes aluminum sols which can be employed in the present invention and is incorporated herein by reference in its entirety. Corresponding processes can be used for other sols such as zirconia, titania, and silica sols as well as mixtures thereof. Commercially available sols can also be employed in the present invention.

The sol is subsequently applied to the carrier. Since sols generally have a lower viscosity than gels, it is preferable to apply a sol rather than a gel. The method for applying the sol will depend on the form of the carrier and any suitable method, e.g. such as dipping, spin coating, knife coating or spraying, can be employed. For example, monolithic carriers can be coated by dipping the carrier into the sol and removing excess sol out of the passages, e.g. by using compressed gas.

A similar procedure can be used to coat flat and corrugated metal foils (cf. Finnish patent 75744 and U.S. Patent No. 4,849,274, which are incorporated herein in their entirety) which are subsequently further processed to honeycomb-like shapes by rolling or forming stacks of foils and introducing them into tubes or by fixing, for example by means of axial rings or metal pins (cf. Finnish patent application 896294, which is also entirely incorporated herein by reference). Bodies of catalytic devices produced in this fashion can be used for exhaust emission control in the same way as catalytically coated perforated metal foils, for example as described in DE-A-39 39 92 or DE-A-29 42 728, each of which are incorporated herein by reference in their entirety.

In a second method it is possible to coat a precursor of a sol onto the carrier and to prepare the sol in situ, e.g. by hydrolysis, on the carrier. The thus formed sol can be further processed in the same manner as the sols which are preformed and then applied to the carrier.

After applying the sol, the coated carrier is dried by removing the liquid portion of the sol at a temperature below 0 °C, preferably from about -5 °C to about -300 °C, more preferably from about -50 °C to about -200 °C. Optionally the drying can be conducted at reduced pressure to enhance the drying rate. Preferably the pressure during the drying step is from about 0.001 mm Hg (0.133 Pa) to about 1 mm Hg (133 Pa), more preferably from about 0.001 mm Hg (0.133 Pa) to about 0.01 mm Hg (1.333 Pa). Typically the drying step will take from about 10 hours to about 30 hours, preferably from about 6 hours to about 12 hours. Freeze-drying units which are suitable for drying the coated carrier are commercially available, e.g. from BOC Edwards, England.

In one preferred method of the freeze-drying, the coated carrier is quickly cooled to a first temperature and subsequently freeze-dried at a second, higher temperature. In the first step, the coated carrier is cooled to a first temperature of e.g. from about -50 °C to about -300 °C, preferably -100 °C to -300 °C. The cooling should be conducted as quickly as possible e.g. within at most 15 minutes, preferably within at most 10 minutes and more preferably within at most 5 minutes. This can be achieved for example by immersing the coated carrier in dry ice, liquid nitrogen, helium or by placing it in any other suitable low temperature environment. The coated carrier will typically remain at the first temperature until the first temperature is achieved throughout the whole body of the carrier. Then the temperature of the coated carrier is allowed to rise to a second temperature which can e.g. be from about -5 °C to about -100 °C, preferably from about -50 °C to about -80 °C. The difference between the first and second temperature should be at least 10 °C. The coated carrier will typically remain at the second temperature until the freeze drying has been completed. The second step can be conducted under reduced pressure as described above.

After drying the cryogel is calcined. The calcination temperature is strongly depends on the material and is generally from about 300 °C to about 1200 °C, preferably from about 400 °C to about 900 °C. The final cryogel will typically be present in an amount of about 1 to about 30 % by weight based on the weight of the carrier, preferably about 1 to about 15 % by weight.

If desired the coating, drying and calcining steps can be repeated to produce a multilayered cryogel coating on the carrier. The coating can have any number of layers so that the desired thickness of the coating is achieved. Generally the coating will have one to about twenty, preferably one to about ten layers.

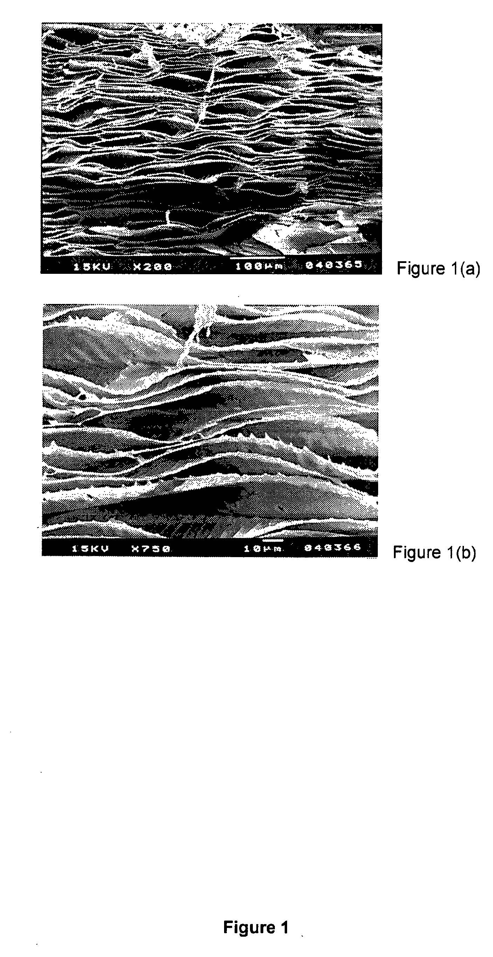

As can be seen in Figure 1, the resultant cryogel generally has a flake-like structure. Without wishing to be bound by theory it is postulated that the cryogel structure may be formed in the following manner. Ice grows in a cellular substructure when the solid-liquid interface advances through the body of the sol at a rate, which provides a region of constitutional supercooling ahead of the advancing interface. As ice forms at the interface, it rejects the solute thus increasing the concentration of solute in the body of sol ahead of the solid-liquid interface. Since the concentration of solute is greatest at the interface, the temperature at the interface is below the freezing temperature of the body everywhere except at the interface.

The resultant cryogel is generally an oxidic material and preferably comprises oxides of aluminum, zirconium, titanium, silicon or mixtures or mixed oxides thereof. The choice of the oxidic material depends on the ultimate use of the article. For use in treating the exhaust gases of internal combustion engines the cryogel will typically comprise aluminum oxide or mixtures or mixed oxides thereof with zirconium oxide, titanium oxide, or silicon oxide, more preferably the cryogel will comprise aluminum oxide.

The article of the present invention can further comprise a catalytically active material. The choice of the catalytically active material will depend on the desired application of the catalytic device and it can be any material which has catalytic activity in the process to be catalyzed. Examples of catalytically active materials are precious metals, transition metals, and metal oxides such as transition metal oxides. Typically the catalytically active material will be at least one precious metal, preferably a platinum group metal or a mixture thereof, more preferably platinum, palladium, rhodium and mixtures thereof. In catalytic devices for exhaust gas treatment, depending, among others, on the selection of catalytically active material, a catalytic device can be obtained that is only oxidizing, or only reducing or which can be employed in a sequentially oxidizing and reducing or concurrently oxidizing and reducing exhaust gas purification system. Oxidation catalysts contain as the active phase preferably platinum and palladium, reduction catalysts preferably platinum and rhodium, the two-bed systems a platinum- and rhodium-containing initial catalyst and a platinum, platinum/palladium-, platinum/rhodium-, or platinum/palladium/rhodium-containing second catalyst; multifunctional catalysts contain preferably platinum/rhodium or platinum/palladium/rhodium. The relative amounts of the catalytically active materials depend on the end use and are well-known in the art.

The catalytically active material can be comprised in the cryogel or can be present thereon. In the first embodiment, for example, a precursor of the catalytically active material (e.g. the catalytically active material itself, a soluble salt, complex or organic compound thereof) can be incorporated into the sol, which is to be applied to the carrier. If necessary, a suitable activation treatment can be conducted. This results in a coating in which the catalytically active material is substantially uniformly distributed.

In the second embodiment the cryogel can be impregnated with a precursor of the catalytically active material (e.g. the catalytically active material itself, a soluble salt, complex or organic compound thereof), subsequently dried and if necessary subjected to a suitable activation treatment (such as elevated temperature). Then a calcining step is performed. For wet impregnation, for example, the incipient wetness technique can also be used.

In the case of precious metals, the catalytically active material can be activated by treatment in a hydrogen-containing gas stream or under hydrothermal conditions. The conditions strongly depend on the material and can be, for example, a temperature from about 250 °C to about 1000 °C, preferably about 250 °C to about 650 °C. The catalytically active material will generally be present in an amount of from about 0.1 to about 5 % by weight, preferably about 1 to about 2 % by weight, based on the weight of the cryogel.

The articless of the present invention can comprise any suitable additive, such as promoters, activators, and stabilizers, as is known in the art. Typically additives are rare earth metal oxides (such as oxides of cerium and lanthanum), alkaline earth metal oxides (such as oxides of calcium, barium, and strontium), transition metal oxides (such as oxides of iron, cobalt, nickel, zirconium, and titanium) or organic compounds such as formamide. The additive can either be incorporated into the cryogel (e.g. by adding a precursor thereof to the sol) or be applied, e.g. by an impregnation method, onto the cryogel, preferably before the catalytically active material is applied. In addition to the above, particulates such as zeolites or ceramic particles can added to further increase the surface area. The amounts of the individual additives will depend on the type of additive and the end use of the article and are known in the art.

The articles of the present invention can be employed in a wide variety of applications. They are especially suitable for use in adsorber, absorber and catalytic applications. Due to its high surface area the cryogel can be used in applications in which compounds such as hydrocarbons or oxygen, which are present in a gas stream, are to be absorbed or adsorbed. Optionally adjuvants such as metal oxides (e.g. cerium oxide in oxygen storage applications) or zeolites can be incorporated into the cryogel depending on the specific requirements of the application.

The articles of the invention are also particularly suitable as catalytic applications. These include heterogeneous catalysts for the manufacture of chemicals (e.g. hydrogenation reactions, reduction reactions, isomerization reactions) or catalytic devices in combustion applications (e.g. catalytic combustor for a gas turbine, catalytic heater). The choice of the catalytically active material will of course depend on the nature of the chemical reaction, which is to be catalyzed and can be selected by a skilled person based on his expertise.

It is also preferred to use the articles of the invention to treat exhaust gases in order to remove undesired compounds (such as hydrocarbons, carbon monoxide and nitrogen oxides) therefrom. However, an number of other pollutants can also be removed. In some of these applications absorption, adsorption and catalytic effects can be combined. The article can be used to treat the exhaust gases of chemical processes, industrial combustion processes or also the exhaust gases of turbines and engines (e.g. gas turbines and internal combustion engines). In a particularly preferred embodiment of the invention, the article is employed as a component of a catalytic device for treating the exhaust gases of an engine, in particular an internal combustion engine. Such catalytic devices are known for oxidation and reduction catalysts in two-bed catalytic converters (here, the exhaust gas is first lead to a reduction catalytic device and then after addition of air to an oxidation catalytic device) and multifunctional catalytic devices for the concurrent conversion of oxidizable and reducible components in the exhaust gas.

To further illustrate the invention the following examples are given. However, they are not to be construed as limiting.

### EXAMPLES

### Example 1

In order to investigate the effect of drying conditions on the properties of the gel, two different drying conditions were studied: drying at ambient conditions (xerogel) and freeze drying (cryogel).

To prepare a sol 1 kg of aluminum iso-propoxide (98%, Alfa Chemicals) was added into 5 liters of distilled-deionised water at a temperature of approx. 80 °C in an open glass container. As the hydrolysis of aluminium iso-propoxide proceeds, iso-propanol is produced and evaporates. The heating is continued until the hydrolysis is completed, which can be recognized by detecting the formation of iso-propanol. Hydrochloric acid is added into the solution to proceed peptisation with the ratio of 0.05 mol HCI/1 mol aluminium iso-propoxide. Zirconium nitrate was also added as a dopant to give a zirconia content of 1 wt.-%. Peptisation is continued at approx. 90 °C until the alumina content of the sol reaches approx. 10 wt.-%. The total volume of the solution can be reduced by evaporation of water during peptisation. Then the resultant sol was aged at a temperature of approx. 80 °C in a vessel fitted with a condensor for approx. 48 hours.

Xerogels were prepared by drying about 20 ml of the alumina sol in a 10 cm petri dish at room temperature in air for two days and subsequently calcining at 450 °C. The resultant xerogel had a glass-like appearance.

To prepare cryogels, about 1 ml of the alumina sol was poured into a metal container (10 mm in diameter, 10 mm long) and this was then dipped into liquid nitrogen (T = 77 K) for approx. 3 minutes to freeze the sol. Then the solvent was sublimated using phosphorous pentoxide (Aldrich, 98%) in a freeze drying unit (Modulyo BOC Edwards, England). The sublimation was conducted under a residual pressure of 10⁻³ mm Hg (0.133 Pa) and lasted for about 15 hours at a temperature of about -60 °C. The resultant material was calcined at 450 °C.

The structure of the cryogel was investigated using scanning electron microscopy (JEOL T330 operated at 15 kV).

The resulting cryogel did not shrink or crack and had a flake-like structure as shown in Figure 1.

### Example 2

A cordierite monolith (Corning Inc., NJ, USA) was dipped in the alumina sol (cf. example 1) for about 2 minutes, excess sol was blown off with an air jet and the coated monolith was subsequently immersed in liquid nitrogen (T = 77 K) for about 30 seconds. Then the coated monolith was placed in the freeze-drying unit at - 60 °C for 10 hours. After drying, the monolith was calcined at 450 °C for 5 hours. This process was repeated so that two layers are obtained.

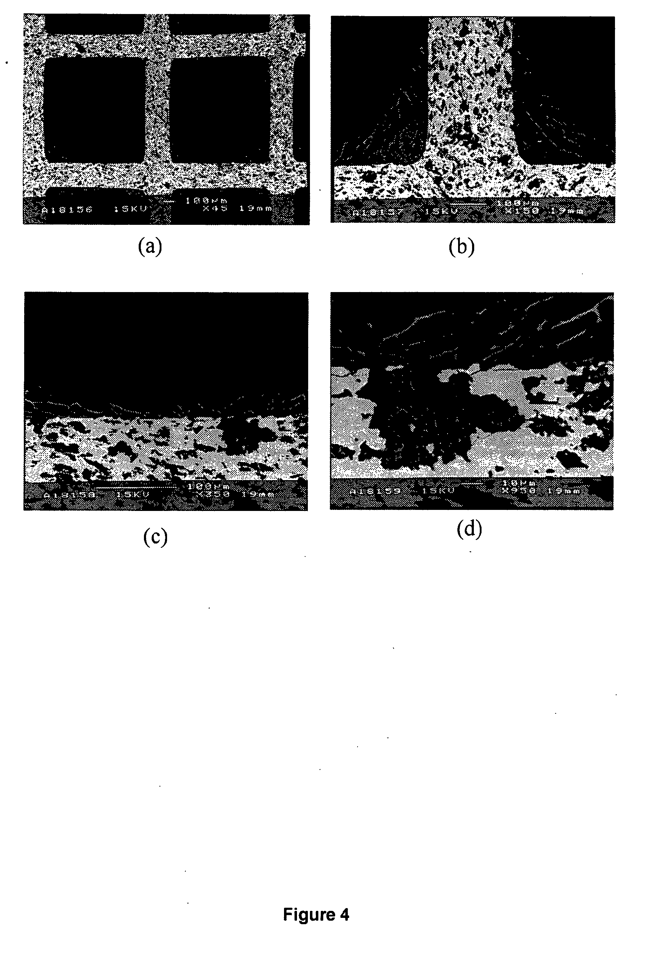

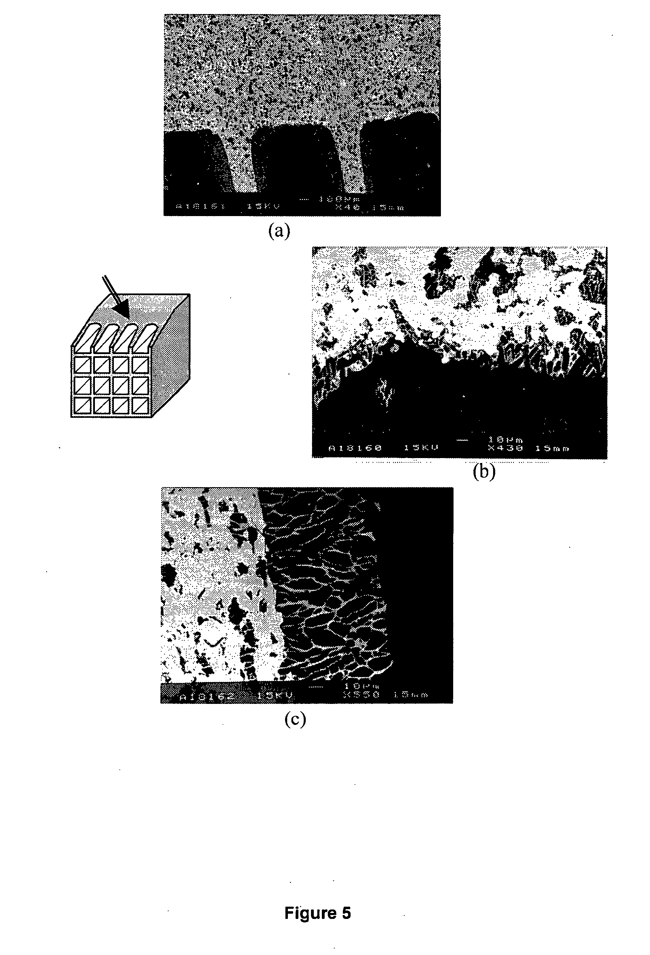

The resultant alumina coating was examined by scanning electron microscopy (cf. Figures 4 and 5). The coating consisted of many layers of flakes, ridged on one side and flat on the other. The thickness of the flakes was between 0.8 µm and 2 µm. The freeze-dried alumina calcined at 450 °C was found to be γ-alumina (confirmed with XRD using Philips diffraction equipment having an X-ray generator PW 1730/10, 4kW and a diffractometer control unit PW 1710; radiation Cu K_{α} at 0.1542 nm). The XRD pattern of the freeze-dried alumina is similar to that of the xerogel.

### Example 3

The cryogels prepared in examples 1 and 2 were characterized by several methods.

Nitrogen adsorption-desorption was measured using an ASAP 2010 (Micrometrics Instrument Co, USA). The adsorbent used was nitrogen and the adsorption isotherm was obtained by measuring the relationship between the amount of nitrogen adsorbed and relative pressure at a constant temperature of 77 K. To obtain reproducible data a certain amount of sample was dried overnight in an oven at 120 °C and then transferred to a sample tube for degassing. The sample was evacuated at 200 °C for at least 5 hours in a vacuum of 5 µm Hg (0.666 Pa). After cooling, the mass of the degassed adsorbent is weighed for use in subsequent calculations.

The pore size of the cryogel was determined using a ASAP 2010 (Micrometrics Instrument Co, USA). The sample analysis was carried out in two runs, a low-pressure run (between vacuum and atmospheric pressure) and a high-pressure run (from atmospheric pressure to 4082 bar).

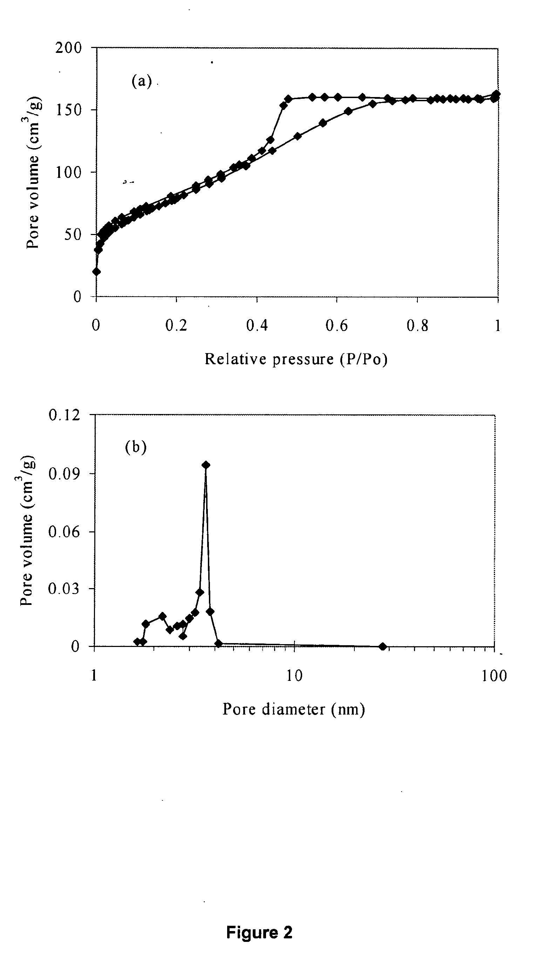

The nitrogen adsorption-desorption isotherm for the nonsupported alumina cryogel calcined at 450°C is Type IV (Figure 2 (a)) which indicates that it has a mesoporous structure. The BET specific surface area of the sample was 282 m²/g and the average pore diameter was 2.8 nm, with a pore size distribution as shown in Figure 2 (b). The xerogel calcined at 450°C had a BET surface area of 295.7 m²/g and an average pore diameter of 3.2 nm.

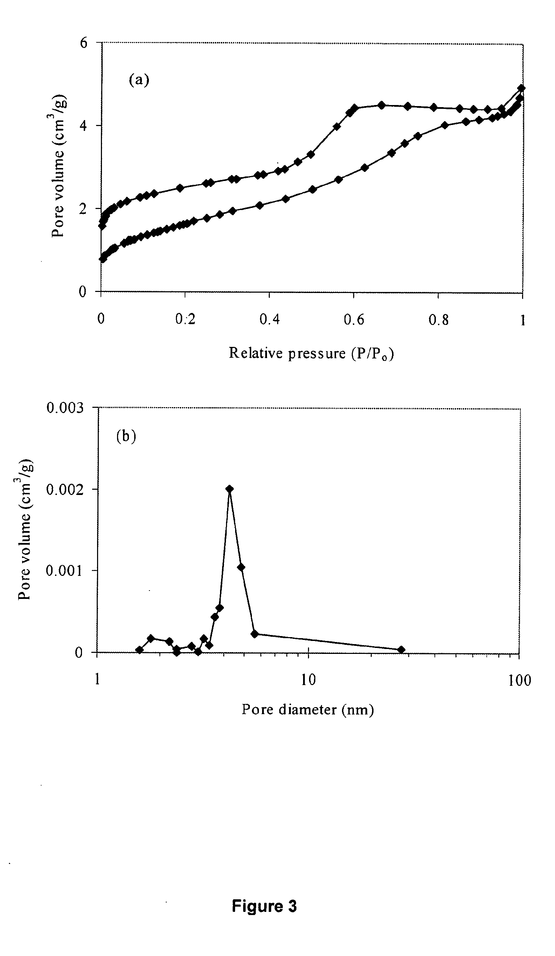

In a similar manner, the nitrogen adsorption-desorption isotherm and the pore size distribution of a supported cryogel are presented in Figure 3. It can be seen that the pore size distribution of the cryogel on a cordierite monolith is close to that of the unsupported one. The average pore diameter being 3.1 nm.

## Claims

1. An article comprising at least one carrier having at least one coating thereon, wherein the coating comprises at least one cryogel.

2. The article according to claim 1 further comprising at least one catalytically active material.

3. The article according to any of claims 1 or 2, wherein the cryogel comprises oxides of aluminum, zirconium, titanium, silicon or mixtures or mixed oxides thereof.

4. The article according to claim 3, wherein the oxide comprises aluminum oxide.

5. The article according to any of claims 1 to 4, wherein the coating further comprises at least one additive selected from rare earth metal oxides, alkaline earth metal oxides, transition metal oxides.

6. The article according to claim 5, wherein the additive is comprised in the cryogel.

7. The article according to claim 5, wherein the additive is present on the cryogel.

8. The article according to any of claims 2 to 7, wherein the catalytically active material is at least one precious metal.

9. The article according to claim 8, wherein the at least one precious metal is a platinum group metal or a mixture thereof.

10. The article according to claim 2, wherein the catalytically active material is comprised in the cryogel.

11. The article according to claim 2, wherein the catalytically active material is present on the cryogel.

12. The article according to any of claims 1 to 11, wherein the article is a component of a catalytic device, absorption device or adsorption device.

13. The article according to claim 12, wherein the catalytic device is a catalytic device for treating exhaust gas.

14. A method of preparing an article comprising:
(i) providing at least one carrier;
(ii) providing a sol;
(iii) applying the sol to the carrier;
(iv) freeze drying the sol; and
(v) calcining the freeze-dried sol to form a cryogel.

15. The method according to claim 14 further comprising the step of applying at least one catalytically active material onto the freeze-dried sol or onto the cryogel.

16. The method according to claim 14 or 15, wherein the sol of the precursor of the at least one metal oxide further comprises a precursor of at least one catalytically active material.

17. The method according to any of claims 14 to 16 further comprising the step of applying at least one additive onto the freeze-dried sol or onto the cryogel.

18. The method according to any of claims 14 to 17, wherein the sol further comprises a precursor of at least one additive.

19. The method according to any of claims 14 to 18, wherein the sol is freeze-dried at a temperature of from about -50 °C to about -200 °C.

20. The method according to any of claims 14 to 19, wherein the sol is cooled to a first temperature of from about -50 °C to about -300 °C and subsequently freeze-dried at a second, higher temperature of about -5 °C to about -100 °C.

21. The method according to claim 20, wherein the first temperature is about -100 °C to about -300 °C.

22. The method according to claim 20 or 21, wherein the second temperature is about -50 °C to about -80 °C.

23. Use of an article according to any of claims 1 to 12 in a catalytic application, absorption application, or adsorption application.

24. Use of an article according to any of claims 1 to 13 for treating gases which contain at least one contaminant selected from hydrocarbons, nitrogen oxides and carbon monoxide.
